# EUROPEAN PATENT APPLICATION

(11) **EP 0 930 149 A2**
(43) Date of publication of application: **21.07.1999**
(21) Application number: 99300193.2
(22) Date of filing: 12.01.1999
(51) Int. Cl.: B29C 65/18, D06F 75/30

(54) **Heating implements**

(30) Priority: 15.01.1998 GB 9800864
(71) Applicant: Huberman, Michelle, London N2 9BJ (GB)
(72) Inventor: Huberman, Michelle, London N2 9BJ (GB)
(74) Representative: Eder, Ephry

(57) **Abstract**

A hand-held heating tool (10) comprises a handle (12), a heating applicator (15) attached to the handle (12), and means (14,16) for electrically heating the heat applicator (15). The heat applicator (15) comprises a metal sole plate (20) of generally planar shape having:
a generally planar first surface (21) that in use is lowermost to contact a substrate (31-38) to be heated;
a generally planar second surface (22), substantially parallel to the first and closely adjacent thereto, to be exposed to the surrounding ambient air; and
first and second extensions (23,24) of the first and second planar surfaces (21,22), said extensions (23,24) being each directed upwardly and forwardly to define a shape for the leading end of the tool - when it is in use moved forwardly over the substrate - in the form of an upwardly and forwardly directed lip (26).

## Description

### Technical Field

This invention relates to heating implements and in particular hand-held heating tools.

### Background Art

Hand-held heating tools are well known for a wide variety of purposes including, without limitation, ironing of clothes, bonding of adhesive joining tape to abutting carpet edges, soldering of electrical connections, wax painting, dental moulding, plastics etching, document preservation and transfer of material from off a backing onto a substrate. In some respects the various heating tools share important features, but in other respects they have operatively distinct features that suit them specifically to their intended purpose.

One example of a hand-held heating tool for use as an electric sealing iron is disclosed in GB-0 622 403, this iron having a tapering box-like housing to apply heat to a substrate.

The present invention, in its broadest form, is considered applicable to hand-held heating tools in general, i.e. without restriction to one particular heating purpose. However, in its preferred form, the present invention is concerned with the provision of a hand-held heating tool for use in so-called hot foil bonding. In hot foil bonding, the foil comprises a material removably adhering to a backing sheet, the material being transferred from the backing sheet onto indicia (lettering and/or images) that have been printed on a substrate (e.g. paper) using a heat responsive toner.

Usually the heat responsive toner is that employed for printing by a photocopying process or a laser printer.

Usually the foil's removable material is in fine, powdered form and is reflective, e.g. to provide a glossy or a metallised finish, and the foil's backing is a flexible thin sheet of polyester or vinyl film. Such foils are available from a number of sources including in the USA, Paper Direct Inc. and, in Europe, the present applicant.

Heat transfer of the foil's removable material onto the toner-printed indicia used to be effected by re-passing the printed substrate, with the foil superimposed on the printed matter, through the photocopier machine or the laser printing machine so that the heat of that machine will effect the required transfer of the foil's removable material onto the re-heated toner of the printed indicia.

This machine-actuated heat transfer can give rise to problems if the superimposed foil and substrate become jammed in the laser-printing or photocopying machine or otherwise fail to pass smoothly through the machine. Accordingly, attempts have been made to introduce hand-held heating tools to enable manual transfer of the foil's removable material onto the substrate's toner-printed indicia. Such hand-held heating tools for hot foil transfer and bonding include the "FOILMASTER" from Silicone Products & Technology Inc. (USA) and the tool available from Paper Direct Inc. (USA). The former comprises a heated roller and is very expensive. The latter comprises a large block with a metal bottom surface and four metal surfaces upstanding therefrom, the forwardly and rearwardly facing surfaces being of rectangular shape of similar dimensions to the bottom surface and directed substantially parallel to one another at an acute angle inclined upwardly and rearwardly, whilst the two side faces of the block are of generally rhomboid shape and directed vertically. These exterior metal surfaces give the block a generally rearwardly sloping appearance to define a sharp linear leading edge for the block.

The use of such prior heating tools for hot foil bonding onto the toner-printed indicia of a substrate has not always been wholly satisfactory. The attachment of the foil material to the indicia can be imperfect, i.e. not fully adhering all over, and/or the foil can snag or crease up under the tool and become crumpled so as to be unusable.

It is therefore desirable to provide a hand-held heating tool which, when used for hot foil bonding, can overcome the above-mentioned and/or other disadvantages of the prior art and which (if possible) can be used for other suitable purposes. It is also desirable to provide an improved method of hot foil bonding.

### Summary of the Invention

According to a first aspect of this invention there is provided a hand-held heating tool comprising a handle, a heating applicator attached to the handle, and means for electrically heating the heat applicator,
characterised in that the heat applicator comprises a metal sole plate of generally planar shape having:
a generally planar first surface that in use is lowermost to contact a substrate to be heated;
a generally planar second surface, substantially parallel to the first and closely adjacent thereto, to be exposed to the surrounding ambient air; and
first and second extensions of the first and second planar surfaces, said extensions being each directed upwardly and forwardly to define a shape for the leading end of the tool - when it is in use moved forwardly over the substrate - in the form of an upwardly and forwardly directed lip.

Advantageously the heat applicator is of copper or an alloy thereof.

Preferably said first and second extensions are contiguous with the first and second surfaces and, advantageously, are curved upwardly as they extend forwardly in a manner similar to the leading toe-end of a ski.

Preferably the electrical heating means includes a temperature control unit. Preferably said control unit is located within a chamber of the handle. Conveniently a wall of said chamber is of thermally and electrically insulating material.

Advantageously said electrical heating means comprises an elongate thermal heater element extending rearwardly and upwardly at an angle to the heat applicator. Advantageously the elongate thermal heater element is of rod-like form and is releasably coupled to a tubular metal part extending upwardly and rearwardly (at said angle) from the generally planar second surface of the heat applicator. Preferably said tubular metal part extends as aforesaid from a zone of said second surface located substantially midway between its sides and substantially midway between its leading and trailing edges. Advantageously said tubular metal part is of copper or an alloy thereof.

According to another aspect of this invention there is provided a method of hot foil bonding a foil's removable material from off a backing sheet of the foil onto a toner-printed indicia on a substrate, wherein the substrate is placed upon a support of silicone rubber material with the indicia facing upwards, the indicia to be hot foil bonded is covered by the foil with the removable material facing downwards and heat from the applicator of a tool according to said first aspect of this invention is applied to the backing sheet to effect transfer of the foil's removable material to the re-heated toner-printed indicia.

Preferably a sheet of substantially non-absorbent material (for example, p.t.f.e.) is interposed between the tool's applicator and either the foil's backing sheet or the substrate to minimise the risk of smudging toner-printed indicia not covered by the foil.

### Brief Description of the Drawings

By way of example one embodiment of this invention will now be described with reference to the accompanying drawings of which:
- Figure 1: is a schematic perspective view of a heating tool according to this invention;
- Figure 2: is a schematic side view of the heat applicator of the tool of Fig 1.

### Detailed Description of Example(s) of the Invention

The illustrated hand-held heating tool 10 comprises an elongate hollow body in the form of a handle 12 of plastics material providing thermal and electrical insulation. A flexible electric cable 14 enters the upper end of handle 12, and an elongate rod-like heating element 16 protrudes generally axially from the lower end of handle 12. A thermal output control unit (not shown) is housed within the hollow handle 12 to provide a temperature controlled, substantially constant heat output for the element 16 and for a heat applicator 15 attached thereto. This heat output may for example be of the order of 18w for an input voltage on cable 14 of 230v, and such as to provide a generally constant temperature of approximately 160° at the heat applicator 15.

The heat applicator 15 is removably attached to the heating element 16 by means of a spring clip 18. The heat applicator 15 comprises a copper or copper alloy sole plate 20 and a tubular connection piece 25 of like material upstanding from sole plate 20 generally centrally thereof to provide a close fit over the rod-like heating element 16. The spring clip 18 comprises two axially spaced pairs of resilient jaws 17a,17b interconnected by a part-cylindrical element 19, the jaws 17a, tightly gripping the upper end of the tubular connection piece 25 and the jaws 17b tightly gripping the adjacent surface of the heating element 16.

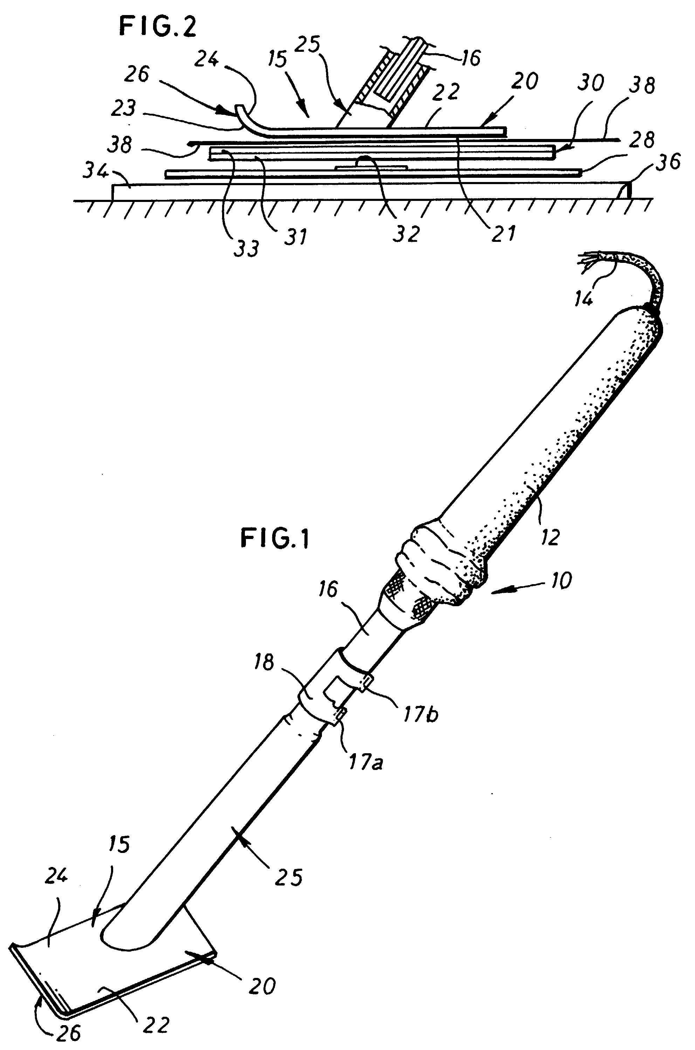

The copper or copper alloy sole plate 20 has a first generally planar surface 21 that in use is lowermost to engage a substrate to be heated, and a generally planar second surface 22 that is in generally parallel superimposed relation to surface 21 and closely adjacent thereto, the surface 22 being exposed to the surrounding ambient air environment (see Fig 2). The closely adjacent parallel surfaces 21,22 are preferably of generally rectangular shape, e.g. approximately 40mm long by 25mm wide and spaced apart by a distance in the range of approximately 1 to 3mm. The leading end of the sole plate 20 is integrally provided with an upwardly and forwardly directed lip 26 of curved form - similar in side view to the leading toe-end of a ski - and defined by first and second contiguous extensions 23,24 of the generally planar surfaces 21, 22 respectively.

In use, to bond material from a foil 30 onto indicia borne upon a sheet of paper 28, the indicia 32 are first produced as "print" in toner medium on the paper sheet 28 by a conventional laser printing machine or by a conventional photocopier machine. A pad 34 of silicone rubber is placed on a table, desk or other support 36, the hand-held tool is then switched ON and, after a short warm-up period allowing the sole plate 20 of the heat applicator 15 to attain its desired set temperature, e.g. about 160°C, (under the control of the control unit within the chamber of hollow handle 12) it is applied to pad 34 by moving it glidingly across the upper surface of pad 34 in order to pre-heat it. The toner-printed sheet 28 is then placed with the printed indicia 32 uppermost on top of the pre-heated pad. The indicia that is to be hot foil bonded is covered by the foil 30 with its powdered material 31 underneath and its backing sheet 33 uppermost and, if not all the printed indicia is to be hot foil bonded, a sheet 38 of p.t.f.e. (e.g. Teflon) or other suitable low-friction and substantially non-absorbent (or "non-stick") material is placed on top. The heat applicator 15 is then moved slowly and glidingly, with the ski-shaped lip 26 leading, over the area of the printed indicia 32 to be hot foil bonded, and with the applicator's lower surface 21 in contact with the foil's backing sheet 33 or, when employed, with the interposed low-friction, "non-stick" sheet 38.

Where provided, the interposed low-friction, "non-stick" sheet 38 avoids any smudging by the sole plate of the printed indicia therebelow that might otherwise occur due to rubbing of the applicator on the re-heated toner medium of the printed indicia. In effect, any such re-melted toner medium is not picked up or absorbed by the sheet 38 and the medium can thus re-form unsmudged, into the original printed indicia form. However, where the foil 30 is provided, the heat from the hand tool debonds the foil's reflective powdered material 31 (metallic or gloss forming) from off its backing sheet 33 and allows it to embed with and bond to the upper surface of the melted toner medium of the indicia therebelow. When the applicator 15 is removed, the toner medium cools and reforms into its permanent printed form - but now with the metallised or gloss effect thereon,

Movement of the heat applicator across the foil 30 or, when provided, the intervening "non-stick" sheet 38, is facilitated by the upwardly and forwardly directed lip 26 which avoids snagging, creasing or crumpling of the foil 30 (or sheet 38) as the applicator is manually moved thereover. Pre-heating of the silicone rubber base pad 34 enables the paper substrate and the foil to receive heat from both above and below thereby to improve the results of the hot foil bonding operation, and in particular the appearance and permanence of the resultant foiled indicia. Use of the silicone rubber base pad 34 also assists in retaining the various superimposed sheets in position and provides for the hot foil bonding operation a suitably resilient base that is resistant to damage, e.g. pitting and scarring from the heat applicator. In this regard it will be appreciated that any such pitting and scarring, which detracts from the desired smooth surface for the pad 34, can have a deleterious effect on subsequent hot foil bonding operations that might otherwise be performed over such surfacially-injured regions of the pad 34.

It will also be appreciated that by providing for the heating element 16 to be of rod-like form encompassed by the tubular connection piece 25, maximum heat transfer from element 16 to sole plate 20 is obtainable with minimal heat loss to the ambient air. In addition, it is considered that the exposed large area provided by surface 22 and its curved extension 24 aids in controlling the temperature at the surface 21 to a predetermined value and avoids overheating.

It will be further appreciated that the clip 18 permits ready removal of the heat applicator 15 either for replacement. Such replacement may be by another similar heat applicator 15 or by an alternative heat applicator, e.g. a pointed tip or bit, for another purpose. Such other purposes may, for example, include stencil cutting, electrical soldering, wax painting, dental moulding, and plastics etching).

In a modification, the low friction 'non-stick' sheet 38 may be provided as a permanent interposed sheet by being adhesively applied directly to the under surface 21 (and its extensiion 23) of the sole plate 20.

Other modifications and embodiments of the invention, which will be readily apparent to those skilled in this art, are to be deemed within the ambit and scope of the invention, and the particular embodiment hereinbefore described may be varied in construction and detail, without departing from the scope of the patent monopoly hereby sought.

## Claims

1. A hand-held heating tool (10) comprising a handle (12), a. heating applicator (15) attached to the handle (12), and means (14,16) for electrically heating the heat applicator (15), **characterised in that** the heat applicator comprises a metal sole plate (20) of generally planar shape having:
a generally planar first surface (21) that in use is lowermost to contact a substrate (31-38) to be heated;
a generally planar second surface (22), substantially parallel to the first surface (21) and closely adjacent thereto, to be exposed to the surrounding ambient air; and
first and second extensions (23,24) of the first and second planar surfaces (21,22), said extensions (23,24) being each directed upwardly and forwardly to define a shape for the leading end of the tool (10) - when it is in use moved forwardly over the substrate (31-38) - in the form of an upwardly and forwardly directed lip (26).

2. A hand-held heating tool according to Claim 1, wherein the heat applicator (15) is of copper or an alloy thereof.

3. A hand-held heating tool according to Claim 1 or Claim 2, wherein said first and second extensions (23,24) are contiguous with the first and second surfaces (21,22).

4. A hand-held heating tool according to Claim 3, wherein said first and second extensions (23,24) are curved upwardly as they extend forwardly in a manner similar to the leading toe-end of a ski.

5. A hand-held heating tool according to any preceding Claim, wherein the electrical heating means (14,16) includes a temperature control unit.

6. A hand-held heating tool according to Claim 5, wherein said control unit is located within a chamber of the handle (12).

7. A hand-held heating tool according to Claim 6, wherein a wall of said chamber is of thermally and electrically insulating material.

8. A hand-held heating tool according to any preceding Claim, wherein said electrical heating means (14,16) comprises an elongate thermal heater element (16) extending rearwardly and upwardly at an angle to the heat applicator (15).

9. A hand-held heating tool according to Claim 8, wherein the elongate thermal heater element (16) is of rod-like form and is releasably coupled to a tubular metal part (25) extending upwardly and rearwardly - at said angle - from the generally planar second surface (22) of the heat applicator (15).

10. A hand-held heating tool according to Claim 9, wherein said tubular metal part (25) extends as aforesaid from a zone of said second surface (22) located substantially midway between its sides and substantially midway between its leading and trailing edges.

11. A hand-held heating tool according to Claim 10, wherein said tubular metal part (25) is of copper or an alloy thereof.

12. A method of hot foil bonding a foil's removable material from off a backing sheet of the foil onto a toner-printed indicia (32) on a substrate (28), wherein the substrate (28) is placed upon a support (34) of silicone rubber material with the indicia (32) facing upwards, the indicia (32) to be hot foil bonded is covered by the foil (30) with the removable material (31) facing downwards and heat from the applicator (15) of a tool (10) according to any one.of Claims 1 to 11 is applied to the backing sheet (33) to effect transfer of the foil's removable material (31) to the re-heated toner-printed indicia (32).

13. A method according to Claim 12 wherein a sheet of substantially non-absorbent material (38) is interposed between the tool's applicator (15) and either the foil's backing sheet (33) or the substrate (28) to minimise the risk of smudging toner-printed indicia (32) not covered by the foil (30).

14. A method according to Claim 13, wherein the sheet of substantially non-absorbent material (38) comprises p.t.f.e.
